# EUROPÄISCHE PATENTANMELDUNG

(11) **EP 4 513 069 A1**
(43) Veröffentlichungstag der Anmeldung: **26.02.2025**
(21) Anmeldenummer: 24193527.9
(22) Anmeldetag: 08.08.2024
(51) Int. Cl.: F16K 37/00

(54) **VERFAHREN ZUR BESTIMMUNG EINES KORREKTURWERTES FÜR EINE REGELEINRICHTUNG FÜR EIN REGELVENTIL**

(30) Priorität: 23.08.2023 DE 102023122643
(71) Anmelder: VAT Holding AG, 9469 Haag (CH)
(72) Erfinder: Pedrelli, Luca, 7302 Landquart (CH); Dachs, Markus, 9470 Buchs (CH)
(74) Vertreter: Torggler & Hofmann Patentanwälte - Rankweil

(57) **Zusammenfassung**

Verfahren zur Bestimmung eines Korrekturwertes für eine Regeleinrichtung (4) für ein Regelventil (1), wobei das Regelventil (1) einen Fluidstrom durch eine Kammer (2) regelt, und ein Verschlussorgan des Regelventils (1) von der Regeleinrichtung (4) mittels eines Stellantriebes (5) des Regelventils (1) in voneinander verschiedenen Stellungen relativ zu einer Durchströmungsöffnung für den Fluidstrom angeordnet wird, wobei ein Encoder, insbesondere des Regelventils (1), vorgesehen ist und jede Stellung des Verschlussorgans einem Encoderwert des Encoders entspricht, wobei in voneinander verschiedenen Stellungen des Verschlussorgans mit einem Drucksensor (8) ein, insbesondere für das Fluid in der Kammer (2) repräsentativer, Druckwert gemessen wird, wobei von der Regeleinrichtung (4) die Stellung des Verschlussorgans, bei der ein Maximum der Druckwerte gemessen wird, als Minimaldurchflussstellung des Verschlussorgans erkannt wird und aus dem Encoderwert, bei dem die Minimaldurchflussstellung erkannt wird, der Korrekturwert bestimmt wird.

## Beschreibung

Die vorliegende Erfindung betrifft ein Verfahren zur Bestimmung eines Korrekturwertes für eine Regeleinrichtung für ein Regelventil. Darüber hinaus betrifft die Erfindung auch ein Verfahren zum Regeln der Stellung eines Verschlussorgans eines Regelventils unter Verwendung eines so bestimmten Korrekturwertes.

Regelventile werden insbesondere in der sogenannten Vakuumtechnik dazu eingesetzt, Fluidströme durch eine Kammer zu regeln. Mit ihnen kann also eingestellt werden, wie viel Fluid pro Zeiteinheit durch die Kammer strömt. Entsprechende Regelventile sind beim Stand der Technik durch offenkundige Vorbenutzung bekannt. Sie weisen ein Verschlussorgan und einen Stellantrieb für dieses Verschlussorgan auf. Die jeweilige Stellung des Verschlussorgans wird mittels eines Encoders bestimmt. Die Regeleinrichtung verwendet die vom Encoder ausgegebenen Encoderwerte als Information, welche Stellung das Verschlussorgan momentan einnimmt. Befindet sich das Verschlussorgan in der Minimaldurchflussstellung, so strömt nur noch das entsprechende Minimum an Fluid durch die Durchströmungsöffnung. In der Minimaldurchflussstellung kann das Verschlussorgan die Durchströmungsöffnung vollständig verschließen, sodass der Minimaldurchfluss dann keinem Durchfluss entspricht. In der Minimaldurchflussstellung kann aber auch ein gewisser minimaler Durchfluss noch möglich sein. Soll mehr Fluid durch die Kammer strömen, so wird das Verschlussorgan mittels des Stellantriebs in eine entsprechend weiter geöffnete Stellung gebracht, in der dann eben entsprechend mehr Fluid pro Zeiteinheit durch die Kammer strömt.

Der Encoderwert gibt dabei die jeweilige Stellung des Verschlussorgans wieder. Im Idealfall ist in der Minimaldurchflussstellung der Encoderwert gleich Null. In der Praxis ist es aber so, dass dies bei der Inbetriebnahme des Regelventils oder wenn das Regelventil gewartet werden musste oder Teile oder das ganze Regelventil ausgetauscht werden müssen, nicht der Fall. In der Regel gibt der Encoder also in der Minimaldurchflussstellung nicht unbedingt den Wert Null, sondern einen anderen Wert aus.

Aufgabe der Erfindung ist es daher, ein Verfahren zur Bestimmung eines Korrekturwertes zur Verfügung zu stellen, mit dessen Hilfe dieses Problem gelöst werden kann.

Hierfür schlägt die Erfindung ein Verfahren gemäß Patentanspruch 1 vor.

Die Erfindung sieht somit ein Verfahren zur Bestimmung eines Korrekturwertes für eine Regeleinrichtung für ein Regelventil vor, wobei das Regelventil einen Fluidstrom durch eine Kammer regelt, und ein Verschlussorgan des Regelventils von der Regeleinrichtung mittels eines Stellantriebes des Regelventils in voneinander verschiedenen Stellungen relativ zu einer Durchströmungsöffnung für den Fluidstrom angeordnet wird, wobei ein Encoder, insbesondere des Regelventils, vorgesehen ist und jede Stellung des Verschlussorgans einem Encoderwert des Encoders entspricht, wobei in voneinander verschiedenen Stellungen des Verschlussorgans mit einem Drucksensor ein, insbesondere für das Fluid in der Kammer repräsentativer, Druckwert gemessen wird, wobei von der Regeleinrichtung die Stellung des Verschlussorgans, bei der ein Maximum der Druckwerte gemessen wird, als Minimaldurchflussstellung des Verschlussorgans erkannt wird und aus dem Encoderwert, bei dem die Minimaldurchflussstellung erkannt wird, der Korrekturwert bestimmt wird.

Der Encoderwert, bei dem die Minimaldurchflussstellung erkannt wird, kann z.B. als der Korrekturwert bestimmt werden. Dann ist der Korrekturwert gleich dem Encoderwert, bei dem die Minimaldurchflussstellung erkannt wird. Der Encoderwert, bei dem die Minimaldurchflussstellung erkannt wird, und der Korrekturwert können aber auch in einem anderen mathematischen Zusammenhang zueinander stehen.

Es ist somit ein Grundgedanke der Erfindung, dass man mit dem Drucksensor den Druck bei verschiedenen Stellungen des Verschlussorgans misst, wobei der jeweilige Encoderwert dabei die jeweilige Stellung des Verschlussorgans wiedergibt. Die Minimaldurchflussstellung des Verschlussorgans, welche auch als Maximalverschlussstellung des Verschlussorgans bezeichnet werden könnte, wird als die Stellung erkannt, bei welcher der Druckwert sein Maximum erreicht. Aus dem Encoderwert, den der Encoder in der Minimaldurchflussstellung ausgibt, wird dann der Korrekturwert bestimmt. Der Korrekturwert könnte auch als Offset bezeichnet werden.

Das erfindungsgemäße Verfahren ist somit eine Art Eichvorgang, welcher vorzugsweise einmalig bei der Inbetriebnahme, einer Wiederinbetriebnahme oder nach der Wartung oder dem Tausch von Teilen des Regelventils bzw. Teilen der gesamten Anordnung, insbesondere des Stellantriebs oder des Encoders zumindest einmalig durchgeführt wird. Im Zuge der Durchführung des Verfahrens wird dann festgestellt, welcher Encoderwert in der Minimaldurchflussstellung des Verschlussorgans vom Encoder ausgegeben wird. Im Idealfall ist der Encoderwert in der Minimaldurchflussstellung gleich Null. Dann kann auch der Korrekturwert gleich Null gesetzt werden. In der Regel wird vom Encoder in der Minimaldurchflussstellung des Verschlussorgans aber ein anderer Encoderwert ausgegeben, welcher aus welchem im nachfolgenden Betrieb des Regelventils in einer weiter unten noch zu erläuterten Art und Weise der Korrekturwert bestimmt werden kann.

Das Verschlussorgan ist der Teil des Regelventils, welcher dazu dient, die Durchströmungsöffnung ganz oder teilweise zu verschließen oder freizugeben. Grundsätzlich kann das Verschlussorgan verschiedenartig ausgeformt sein. In bevorzugten Ausgestaltungsformen handelt es sich aber um ein tellerförmiges Verschlussorgan, welches auch als Verschlussteller oder Ventilteller bezeichnet werden kann.

Die Durchströmungsöffnung, welche vom Verschlussorgan je nach Stellung des Verschlussorgans entsprechend weit verschlossen oder freigegeben wird, kann sich in einem Gehäuse des Regelventils befinden. Es ist aber z.B. auch möglich, dass sich eine Durchströmungsöffnung in einer Kammerwand der Kammer oder in einer mit der Kammer verbundenen Fluidleitung befindet. In der Minimaldurchflussstellung kann das Verschlussorgan die Durchströmungsöffnung vollständig abdichten bzw. verschließen, aber auch einen gewissen bzw. minimalen Durchfluss noch zulassen. Dies kann der Fachmann so ausbilden, wie er das für den jeweiligen Anwendungsfall benötigt. Die Minimaldurchflussstellung kann jedenfalls auch als Maximalverschlussstellung des Verschlussorgans bezeichnet werden.

Der Stellantrieb des Regelventils, mit dem das Verschlussorgan in seine verschiedenen Stellungen relativ zur Durchströmungsöffnung gebracht werden kann, kann z.B. als ein elektrischer Stellmotor ausgebildet sein. Es kann sich aber auch um einen pneumatischen, hydraulischen oder anders ausgeformten motorischen Antrieb handeln. Auch Mischformen dieser an sich bekannten Antriebsformen sind möglich.

Der Encoder kann aber muss nicht direkt Teil des Regelventils und insbesondere auch des Stellantriebs sein. Er kann z.B. in den Stellantrieb intergriert oder an diesen angebaut sein oder in anderer Art und Weise die jeweilige Stellung des Verschlussorgans bestimmen und wiedergeben. Es kann sich um analog aber auch um in Schritten, also in Encoderschritten, messende digitale Encoder handeln. Entsprechend können die Encoderwerte im Fall einer digitalen Ausführung eine Abfolge von ganzen Zahlen sein. Bei analog messenden Encodern können die Encoderwerte aber auch als rationale Zahlen, also mit Nachkommastellen die jeweilige Stellung des Verschlussorgans wiedergeben. Vorzugsweise ist jedenfalls vorgesehen, dass jede Stellung des Verschlussorgans genau einem Encoderwert des Encoders entspricht. Der Encoder könnte auch als Messwertgeber oder im Falle eines drehenden Encoders als Drehgeber bezeichnet werden. Entsprechend könnte man die Encoderwerte auch als Messwertgeberwerte oder als Drehgeberwerte bezeichnen.

Bei dem mittels des Regelventils zu regelnden Fluidstrom durch die Kammer kann es sich um einen reinen Gasstrom, aber auch um einen reinen Flüssigkeitsstrom oder aber auch um Mischformen davon handeln.

Bei dem vom Drucksensor gemessenen Druckwert handelt es sich vorzugsweise um einen, für das Fluid in der Kammer repräsentativen Druckwert. Dieser kann direkt in der Kammer, aber auch in einer mit der Kammer verbundenen Leitung oder an anderer geeigneter Stelle gemessen werden. Vorzugsweise ist der Druckwert jedenfalls repräsentativ für den momentanen Druck in der Kammer.

Bei der Durchführung des Verfahrens sollte die Stellung des Verschlussorgans zumindest die maßgebliche, den jeweiligen Druckwert hauptsächlich beeinflussende Größe sein. Der Druckwert sollte also klar mit der jeweiligen Stellung des Verschlussorgans korrelieren bzw. von dieser beeinflusst sein. In anderen Worten sollte die Stellung des Verschlussorgans die wesentliche, klar erkennbare Einflussgröße für den, mittels des Drucksensors gemessenen, Drucks sein. Bevorzugte Ausgestaltungsformen des erfindungsgemäßen Verfahrens sehen vor, dass die Stellung des Verschlussorgans während der Durchführung des erfindungsgemäßen Verfahrens zur Bestimmung des Korrekturwertes die einzige Einflussgröße auf den mittels des Drucksensors gemessenen Druckes ist. In diesem Sinne ist also vorzugsweise vorgesehen, dass die Kammer während der Durchführung des gesamten Verfahrens permanent von Fluid durchströmt wird und die Änderung der Stellung des Verschlussorgans die einzige, sich während des Verfahrens ändernde, den Fluidstrom beeinflussende Größe ist.

Die Regeleinrichtung empfängt vom Encoder die Encoderwerte und vom Drucksensor die Druckwerte. In der Regel dient die Regeleinrichtung zunächst einmal dazu, in Abhängigkeit der Vorgaben, also der jeweils gewünschten Stellung des Verschlussorgans unter Berücksichtigung der Encoderwerte den Stellantrieb so anzusteuern, dass das Verschlussorgan in die jeweils gewünschte Stellung gebracht wird. Im erfindungsgemäßen Verfahren dient die Regeleinrichtung aber eben auch der Durchführung dieses erfindungsgemäßen Verfahrens und damit der Bestimmung des Korrekturwertes. Die Regeleinrichtung kann direkt Teil des Regelventils sein. Es kann sich aber auch um eine externe Regeleinrichtung handeln, welche mit dem Regelventil und dem Drucksensor eben entsprechend verbunden ist.

Vorzugsweise ist vorgesehen, dass das Fluid während der Durchführung des erfindungsgemäßen Verfahrens zur Bestimmung des Korrekturwertes mittels einer Pumpe durch ein Durchflussmengenstellventil und die Kammer und die Durchströmungsöffnung hindurchgesaugt wird. Das Regelventil befindet sich vorzugsweise zwischen der Pumpe und der Kammer. Es kann z.B. in einer zwischen der Pumpe und der Kammer verlaufenden Fluidleitung oder auch direkt zwischen Pumpe und Kammer angeordnet sein.

Grundsätzlich kann die einmalige Durchführung des erfindungsgemäßen Verfahrens zur Bestimmung des Korrekturwertes als ausreichend angesehen werden. Insbesondere dann, wenn das Verschlussorgan aber ein gewisses Spiel hat, oder es sich um einen digitalen Encoder handelt, welcher nur ganzzahlige Encoderwerte ausgibt, kann es aber auch angezeigt sein, das Verfahren zur Bestimmung des Korrekturwertes einmal beim Öffnen und einmal beim Schließen des Regelventils durchzuführen. Bevorzugte Varianten der Erfindung sehen vor, dass das Verfahren ein erstes Mal und anschließend ein zweites Mal durchgeführt wird, wobei beim ersten Mal die Stellungen des Verschlussorgans in einer ersten Richtung durchlaufen werden und beim zweiten Mal die Stellungen des Verschlussorgans in einer zweiten, der ersten Richtung entgegengesetzten Richtung durchlaufen werden und beim ersten Mal ein erster Korrekturwert und beim zweiten Mal ein zweiter Korrekturwert bestimmt wird und der Korrekturwert auf Basis des ersten Korrekturwertes und des zweiten Korrekturwertes bestimmt wird. In diesem Fall, in dem der Korrekturwert also auf Basis von zwei Korrekturwerten nämlich dem ersten Korrekturwert und dem zweiten Korrekturwert bestimmt wird, kann man auch von einem endgültigen Korrekturwert sprechen, welcher dann beim Betrieb des Regelventils, wie nachfolgend noch erläutert, berücksichtigt wird. Zur Berechnung dieses endgültigen Korrekturwertes kann z.B. ein Mittelwert aus dem ersten Korrekturwert und dem zweiten Korrekturwert berechnet werden. Es ist aber auch denkbar einfach den kleineren Wert oder den größeren Wert der beiden genannten Korrekturwerte als endgültigen Korrekturwert zu verwenden. Arbeitet das erfindungsgemäße Verfahren mit einem digitalen Encoder bei dem die Encoderwerte immer ganze Zahlen sind, so kann der so berechnete endgültige Korrekturwert auch entsprechend zur nächsten ganzen Zahl auf- oder abgerundet werden.

Grundsätzlich ist es möglich, beim erfindungsgemäßen Verfahren zur Bestimmung des Korrekturwertes alle möglichen Stellungen des Verschlussorgans abzufahren, um so sicher zu stellen, dass man die Minimaldurchflussstellung und den entsprechenden Encoderwert findet. In der Regel liegen aber ausreichend Vorinformationen vor, sodass der Fachmann nur einen vorab festzulegenden Bereich von Stellungen des Verschlussorgans abfahren muss, um dabei sicher auch die Minimaldurchflussstellung mit zu umfassen. Solche Vorinformationen können z.B. bei einem Wechsel des Regelventils oder Teilen des Regelventils der Encoderwert bei der Minimaldurchflussstellung des vorab verwendeten Regelventils sein. Es ist aber auch möglich, dass das Regelventil eine durch einen Anschlag oder anderweitig vorgegebene Ausgangsposition aufweist und das Verschlussorgan bei Durchführung des Verfahrens ausgehend von der Ausgangsposition des Verschlussorgans in den voneinander verschiedenen Stellungen relativ zur Durchströmungsöffnung für den Fluidstrom angeordnet wird. Anderweitig vorgegebene Ausgangspositionen können z.B. anstelle des Anschlags auf einem Gehäuse des Regelventils angezeichnete Stellungen oder dergleichen sein.

Das erfindungsgemäße Verfahren zur Bestimmung des Korrekturwertes kann für unterschiedlich ausgestaltete Regelventile verwendet werden. So kann es sich bei dem Regelventil z.B. um ein sogenanntes Butterfly-Ventil, also in anderen Worten Schmetterlingsventil, handeln. Es kann also vorgesehen sein, dass das Verschlussorgan ein Ventilteller ist, welcher vom Stellantrieb um eine entlang des Ventiltellers verlaufende Schwenkachse schwenkbar ist, wobei der Ventilteller auf einander gegenüberliegenden Seiten der Schwenkachse über die Schwenkachse übersteht. Bei den sogenannten Butterfly-Ventilen könnte man auch davon sprechen, dass die Schwenkachse in der Ebene des Ventiltellers verläuft, wobei der Begriff der Ebene des Ventiltellers aufgrund der räumlichen Ausdehnung des Ventiltellers natürlich eine gewisse Vereinfachung darstellt.

Bei dem Regelventil, mit dem das erfindungsgemäße Verfahren zur Bestimmung des Korrekturwertes umgesetzt wird, kann es sich z.B. aber auch um ein Pendelventil handeln. Es kann also vorgesehen sein, dass das Verschlussorgan ein Ventilteller ist, welcher vom Stellantrieb um eine parallel zu einer Normalen auf den Ventilteller verlaufenden Schwenkachse schwenkbar ist. Die Schwenkachse verläuft bei Pendelventilen in der Regel randlich neben dem Ventilteller. Der Ventilteller kann über einen Schwenkarm mit der Schwenkachse verbunden sein. Das Lager der Schwenkachse kann aber auch direkt am Rand des Ventiltellers angeordnet sein.

Bei den bislang genannten Regelventilen in Form von Butterfly-Ventilen und Pendelventilen sind die voneinander verschiedenen Stellungen des Verschlussorgans immer voneinander verschiedene Winkelstellungen. Auch dies muss nicht zwingend so sein. Erfindungsgemäße Verfahren zur Bestimmung des Korrekturwertes können z.B. auch bei Ventilen eingesetzt werden, bei denen das Verschlussorgan, insbesondere linear, verschiebbar gelagert ist. Bei solchen Regelventilen wird das Verschlussorgan also zwischen den verschiedenen Stellungen, in denen es die Durchströmungsöffnung mehr oder weniger weit verschließt, hin und her geschoben. Das Verschlussorgan kann hierfür z.B. auf einer Führung, insbesondere Linearführung, oder dergleichen gelagert sein.

Wenn der Korrekturwert bestimmt ist, kann er anschließend beim oben bereits genannten Betrieb des Regelventils oder in anderen Worten beim Normalbetrieb des Regelventils, bei dem über eine entsprechende Stellung des Verschlussorgans der Fluidstrom durch die Durchströmungsöffnung entsprechend eingestellt wird, verwendet werden. Dieser Betrieb oder in anderen Worten der Normalbetrieb des Regelventils sieht in einem erfindungsgemäßen Verfahren zum Regeln der Stellung eines Verschlussorgans eines Regelventils mittels einer Regeleinrichtung vor, dass die jeweils anzusteuernde Stellung des Verschlussorgans unter Berücksichtigung eines mit einem oben genannten erfindungsgemäßen Verfahren bestimmten Korrekturwerts von der Regeleinrichtung bestimmt wird. Ein solches Verfahren könnte, insbesondere dann, wenn sonst keine Regelgrößen außer die reine Vorgabe der gewünschten Stellung des Verschlussorgans zu berücksichtigen sind, auch als ein Verfahren zum Steuern der Stellung des Regelventils bezeichnet werden.

Bei diesem Verfahren also beim Betrieb bzw. beim Normalbetrieb des Regelventils ist die Minimaldurchflussstellung vorzugsweise eine Endstellung, welche im Gegensatz zum erfindungsgemäßen Verfahren zur Bestimmung eines Korrekturwertes nicht überfahren wird. In diesem Betrieb bzw. Normalbetrieb des Regelventils ist vorzugsweise vorgesehen, dass das Verschlussorgan ausschließlich in solche Stellungen gebracht wird, bei denen der jeweilige Encoderwert größer oder gleich dem Korrekturwert ist oder bei denen der jeweilige Encoderwert kleiner oder gleich dem Korrekturwert ist.

Weitere Merkmale und Einzelheiten bevorzugter Ausgestaltungsformen des erfindungsgemäßen Verfahrens werden nachfolgend anhand von Ausführungsbeispielen exemplarisch erläutert. Es zeigen:
- Fig. 1: eine Anordnung mit einer Kammer und einem Regelventil, mit der die erfindungsgemäßen Verfahren durchgeführt werden können, in einer schematischen Darstellung;
- Fig. 2: einen schematisierten Längsschnitt durch ein Regelventil in Form eines Butterfly-Ventils, mit dem die erfindungsgemäßen Verfahren durchgeführt werden können;
- Fig. 3: eine schematisierte Schnittdarstellung zu dem Regelventil aus Fig. 2 im Bereich des Verschlussorgans;
- Fig. 4: eine Darstellung des Druckes gegen den Encoderwert für den Fall, dass keine Korrektur notwendig ist;
- Fig. 5: die Stellung des Verschlussorgans beim Encoderwert 0 aus Fig. 4;
- Fig. 6: die Stellung des Verschlussorgans beim Encoderwert 10 aus Fig. 4;
- Fig. 7: ein Beispiel, in einer Darstellung analog zu Fig. 4, bei dem eine Korrektur notwendig ist;
- Fig. 8: die Stellung des Verschlussorgans beim Encoderwert 2 aus Fig. 7;
- Fig. 9: die Stellung des Verschlussorgans beim Encoderwert 4 aus Fig. 7 und
- Fig. 10: die Stellung des Verschlussorgans beim Encoderwert 12 aus Fig. 7;
- Fig. 11: eine Darstellung Druck gegen Encoderwert zur Veranschaulichung eines erfindungsgemäßen Verfahrens zur Bestimmung eines Korrekturwertes;
- Fig. 12: die Stellung des Verschlussorgans des Regelventils beim Encoderwert 0 aus Fig. 11;
- Fig. 13: die Stellung des Verschlussorgans beim Encoderwert 4 aus Fig. 11;
- Fig. 14: die Stellung des Verschlussorgans beim Encoderwert 8 aus Fig. 11;
- Fig. 15: eine Darstellung des Drucks gegen den Encoderwert für eine zweite Variante eines erfindungsgemäßen Verfahrens zur Bestimmung eines Korrekturwertes;
- Fig. 16 bis 18: schematisierte Darstellungen zu einem Regelventil in Form eines Pendelventils;
- Fig. 19 bis 21: schematische Darstellungen zu einem Regelventil mit einem verschiebbar gelagerten Verschlussorgan;
- Fig. 22: eine Darstellung Druck- gegen Encoderwert zur Veranschaulichung eines Verfahrens zum Regeln der Stellung eines Verschlussorgans des Regelventils unter Verwendung des Korrekturwerts;
- Fig. 23: eine Veranschaulichung der Stellung des Verschlussorgans beim Encoderwert 4 aus Fig. 22 und
- Fig. 24: eine Veranschaulichung der Stellung des Verschlussorgans beim Encoderwert 14 aus Fig. 22.

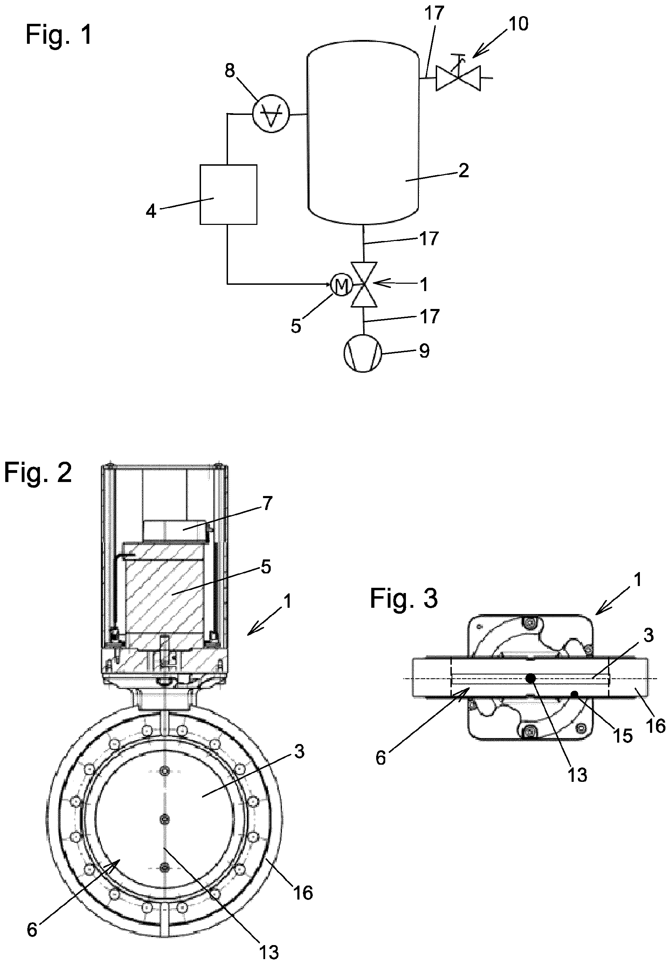

Fig. 1 zeigt eine schematische Darstellung zu einer Anordnung mit der sowohl das erfindungsgemäße Verfahren zur Bestimmung des Korrekturwertes K als auch das erfindungsgemäße Verfahren zum Regeln der Stellung eines Verschlussorgans 3 eines Regelventils 1 durchgeführt werden kann. Die Anordnung umfasst eine Kammer 2. Hier kann es sich z.B. um eine Prozesskammer, um eine Transferkammer oder andere Kammern handeln. Insgesamt wird die Anordnung vorzugsweise im Bereich der Vakuumtechnik eingesetzt, was aber nicht zwingend der Fall sein muss. Dies gilt auch für die erfindungsgemäßen Verfahren. Von Vakuumtechnik spricht man insbesondere dann, wenn mit Druckniveaus kleiner oder gleich 0,001 mbar (Millibar) bzw. 0,1 Pascal gearbeitet wird. Man kann von Vakuumtechnik aber auch bereits dann sprechen, wenn mit Drücken unter Normaldruck, also unter 1 bar gearbeitet wird.

Das Regelventil 1 ist hier in diesem Beispiel in einer Fluidleitung 17 zwischen der Kammer 2 und der Pumpe 9 angeordnet. Der Stellantrieb 5 dient der Verstellung des Verschlussorgans 3 des Regelventils 1. Der Stellantrieb 5 wird von der Regeleinrichtung 4 angesteuert. Die Regeleinrichtung 4 ist hierzu auch mit einem Drucksensor 8 zur Bestimmung eines Druckwertes P, hier eines für den Druck in der Kammer 2 repräsentativen Druckwertes P verbunden. Über das Durchflussmengenstellventil 10 und eine entsprechende Fluidleitung 17 kann das Fluid, insbesondere das Gas, in die Kammer 2 einströmen. Den hierfür notwendigen Unterdruck baut die Pumpe 9 auf. Es handelt sich hier also um eine Saugpumpe 9, welche das Fluid, insbesondere das Gas, durch das Durchflussmengenstellventil 10 und die Kammer 2 und die Durchströmungsöffnung 6 des Regelventils 1 hindurchsaugt. Der Vollständigkeit halber wird darauf hingewiesen, dass der Drucksensor 8 auch in der Fluidleitung 17 zwischen der Kammer 2 und dem Regelventil 1 angeordnet sein könnte, um einen für den Druck in der Kammer 2 repräsentativen Druckwert P zu messen. Auch andere Anordnungen des Drucksensors 8 wären grundsätzlich möglich.

Fig. 2 zeigt einen schematisierten Längsschnitt durch ein Regelventil 1 in Form eines sogenannten Butterfly-Ventils bzw. in anderen Worten Schmetterlingsventils. Das Verschlussorgan 3 ist hier ein Ventilteller, welcher vom Stellantrieb 5 um die entlang des Ventiltellers verlaufende Schwenkachse 13 schwenkbar ist. Der Ventilteller steht dabei immer auf einander gegenüberliegenden Seiten der Schwenkachse 13 über die Schwenkachse 13 über. Solche sogenannten Butterfly-Ventile sind an sich bekannt und müssen nicht weiter erläutert werden. In der in den Fig. 2 und 3 dargestellten Minimaldurchflussstellung, oder in anderen Worten Maximalverschlussstellung, ist das Verschlussorgan 3, also hier der Ventilteller, so in der Durchströmungsöffnung 6 angeordnet, dass es die Durchströmungsöffnung 6 maximal verschließt, also in anderen Worten nur der minimale Durchfluss an Fluid möglich ist. Je nach Ausführungsbeispiel des Regelventils 1 kann das Verschlussorgan 3 die Durchströmungsöffnung 6 in der Minimaldurchflussstellung vollständig verschließen bzw. abdichten, sodass sich der Fluidstrom gleich Null ist. Es sind aber auch Regelventile 1 möglich, bei denen in der Minimaldurchflussstellung eben noch ein gewisser Mindestwert des Fluidstroms durch die Durchströmungsöffnung 6 zugelassen wird.

Die Durchströmungsöffnung 6 befindet sich in diesem Ausführungsbeispiel des Regelventils 1 in einem Ventilgehäuse 16 des Regelventils 1. Dies muss aber, wie eingangs erläutert, nicht unbedingt der Fall sein. Es ist auch möglich, dass die Durchströmungsöffnung 6 sich direkt in einer Kammerwand der Kammer 2 oder in einem anderen Gehäuse z.B. der Fluidleitung 17 befindet.

Zum Verschwenken des Ventiltellers bzw. des Verschlussorgans 3 um die Schwenkachse 13 ist in diesem Regelventil 1 der Stellantrieb 5 vorgesehen, welcher von der Regeleinrichtung 4 entsprechend angesteuert wird. Es kann sich, wie hier in diesem Ausführungsbeispiel, z.B. um einen Elektromotor aber auch um andere, geeignete Stellantriebe 5 handeln, welche beim Stand der Technik an sich bekannt sind.

In dem Längsschnitt gemäß Fig. 2 sieht man auch den Encoder 7, welcher die jeweilige Stellung des Verschlussorgans 3 feststellt und an die Regeleinrichtung 4 weiterleitet. Der Encoder 7 kann z.B. direkt auf die vom Stellantrieb 5 gedrehte Schwenkachse 13 zugreifen, um deren Stellung zu bestimmen. Hier in diesem Ausführungsbeispiel ist der Encoder 7 als ein Zusatzteil dargestellt, welcher mit dem Stellantrieb 5 verbunden ist. Natürlich könnte der Encoder 7 auch direkt in den Stellantrieb 5 integriert sein. Es wäre aber auch möglich, Encoder 7 zur Feststellung der Stellung des Verschlussorgans 3 zu verwenden, welche vom Stellantrieb 5 oder sogar vom Regelventil 1 ganz losgelöst sind.

In Fig. 3 sieht man noch schematisiert eingezeichnet einen Anschlag 15, welcher optional vorhanden sein kann, aber nicht muss. Wird das Verschlussorgan 3 so verschwenkt, dass es zur Anlage an den Anschlag 15 kommt, so hat es eine definierte Ausgangsstellung erreicht.

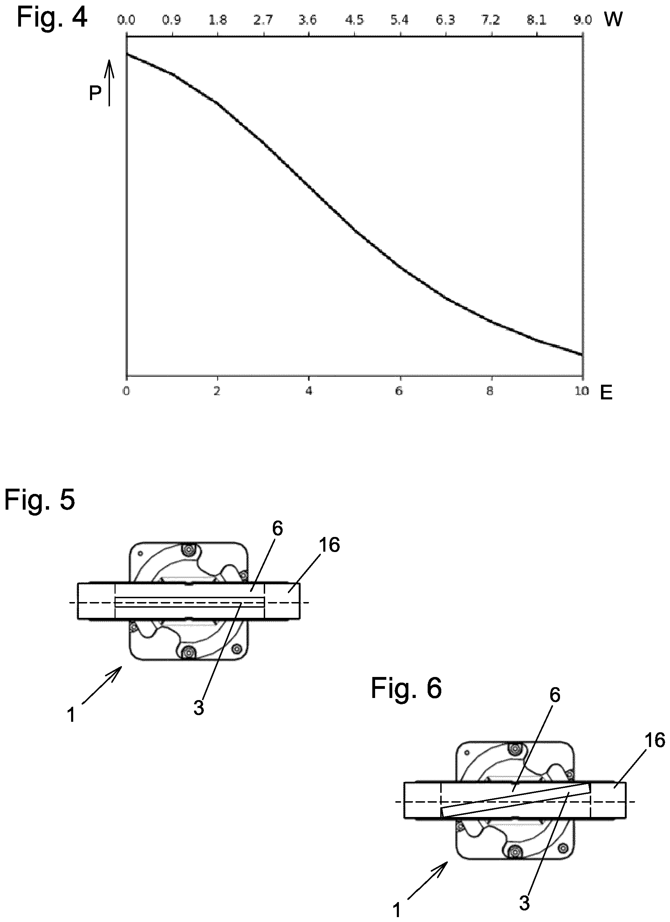

Die Fig. 4 bis 10 dienen nun der Erläuterung des mit der Erfindung zu lösenden Problems des Standes der Technik.

In Fig. 4 sind für verschiedene Stellungen des Regelventils 1 mittels des Drucksensors 8 gemessene Druckwerte P gegen den jeweils in der jeweiligen Stellung vom Encoder 7 ausgegebenen Encoderwert E aufgetragen. Zusätzlich zeigt die Darstellung noch den tatsächlichen Winkel W also die tatsächliche Stellung des Verschlussorgans 3 an. Der Winkel 0,0° entspricht dabei der in Fig. 5 dargestellten Minimaldurchflussstellung. Der Winkel W gleich 9,0° entspricht der in Fig. 6 dargestellten Stellung des Verschlussorgans 3 des Regelventils 1. Fig. 4 zeigt den Idealzustand, bei dem der Encoder den Encoderwert 0 dann ausgibt, wenn sich das Verschlussorgan 3 in der Minimaldurchflussstellung, also in anderen Worten in der maximalen Schließstellung, befindet. In dieser Stellung ist der Druckwert P maximal.

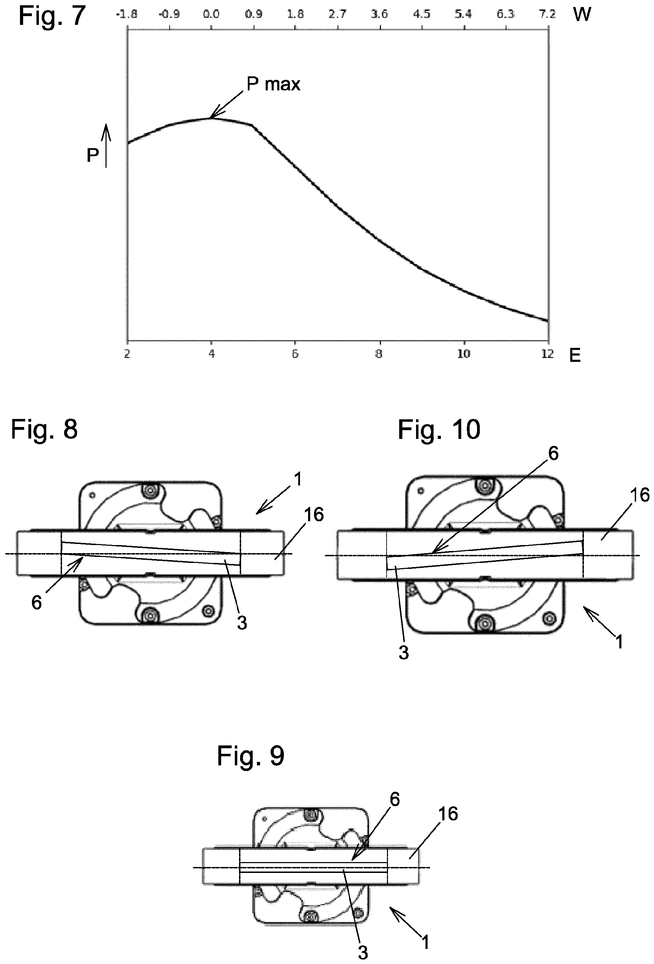

Wie eingangs bereits erläutert, entspricht dieser anhand der Fig. 4 bis 6 gezeigte Idealzustand allerdings oft nicht der Realität. Sowohl bei der Inbetriebnahme der Anordnung als auch nach dem Tausch des Regelventils 1 oder des Encoders 7 oder des Stellantriebs 5 oder von Komponenten davon, kann es dazu kommen, dass der Encoder 7 in der Minimaldurchflussstellung nicht mehr den Encoderwert 0, sondern irgendeinen anderen Encoderwert ausgibt. Ein Beispiel hierfür ist in Fig. 7 dargestellt. Auch hier ist der vom Drucksensor 8 gemessene Druckwert P gegen den vom Encoder 7 in der jeweiligen Stellung des Verschlussorgans 3 ausgegebenen Encoderwert E aufgetragen. Zusätzlich ist auch hier der Winkel W also die Stellung mit eingezeichnet, in dem bzw. in der sich das Verschlussorgan 3 beim jeweiligen Encoderwert E tatsächlich befindet. Dieser Winkel W wird wie in Fig. 4 immer gegen die Minimaldurchflussstellung gemessen.

In dem hier frei gewählten, in Fig. 7 dargestellten Beispiel liegt das Maximum Pmax des vom Drucksensor 8 gemessenen Druckes P nicht, wie eigentlich wünschenswert, beim Encoderwert 0, sondern beim Encoderwert 4. Hier ist es also so, dass die Minimaldurchflussstellung, bei der das Maximum Pmax der Druckwerte P gemessen wird, dem Encoderwert 4 und nicht, wie im Idealfall gemäß Fig. 4 auch realisiert, dem Encoderwert 0 entspricht. Fig. 8 zeigt die Stellung des Verschlussorgans 3 beim Encoderwert 2 aus Fig. 7. Fig. 9 zeigt die Minimaldurchflussstellung des Verschlussorgans 3, wie sie bei dem Beispiel gemäß Fig. 7 eben beim Encoderwert 4 erreicht wird. Fig. 10 zeigt die Stellung des Verschlussorgans 3 beim Encoderwert 12 aus Fig. 7.

Bleibt die anhand der Fig. 7 bis 10 veranschaulichte Tatsache unberücksichtigt, dass die Minimaldurchflussstellung nicht beim Encoderwert 0, sondern bei einem anderen Encoderwert, wie hier in diesem Beispiel also dem Encoderwert 4, erreicht wird, so kommt es bei der Regelung der Stellung des Verschlussorgans 3 mittels der Regeleinrichtung 4 zu Fehlstellungen. Das Verschlussorgan 3 wird bei diesen Fehlstellungen in anderen Winkeln W bzw. Stellungen eingestellt, als dies von der Regeleinrichtung 4 eigentlich beabsichtigt ist.

Um diesen möglichen Fehler korrigieren zu können, wird das erfindungsgemäße Verfahren zur Bestimmung eines Korrekturwertes K für die Regeleinrichtung 4 für das Regelventil 1 vorgeschlagen, wobei das Regelventil 1 einen Fluidstrom durch die Kammer 2 regelt und das Verschlussorgan 3 des Regelventils 1 von der Regeleinrichtung 4 mittels des Stellantriebs 5 des Regelventils 1 in voneinander verschiedenen Stellungen relativ zu einer Durchströmungsöffnung 6 für den Fluidstrom angeordnet wird und wobei ein Encoder 7, insbesondere des Regelventils 1, vorgesehen ist und jede Stellung des Verschlussorgans 3 einem Encoderwert E des Encoders 7 entspricht, wobei in voneinander verschiedenen Stellungen des Verschlussorgans 3 mit dem Drucksensor 8 ein, insbesondere für das Fluid in der Kammer 2 repräsentativer, Druckwert P gemessen wird, wobei von der Regeleinrichtung 4 die Stellung des Verschlussorgans 3, bei der das Maximum Pmax der Druckwerte P gemessen wird, als Minimaldurchflussstellung des Verschlussorgans 3 erkannt wird und aus dem Encoderwert E bei dem die Minimaldurchflussstellung erkannt wird, der Korrekturwert K bestimmt wird.

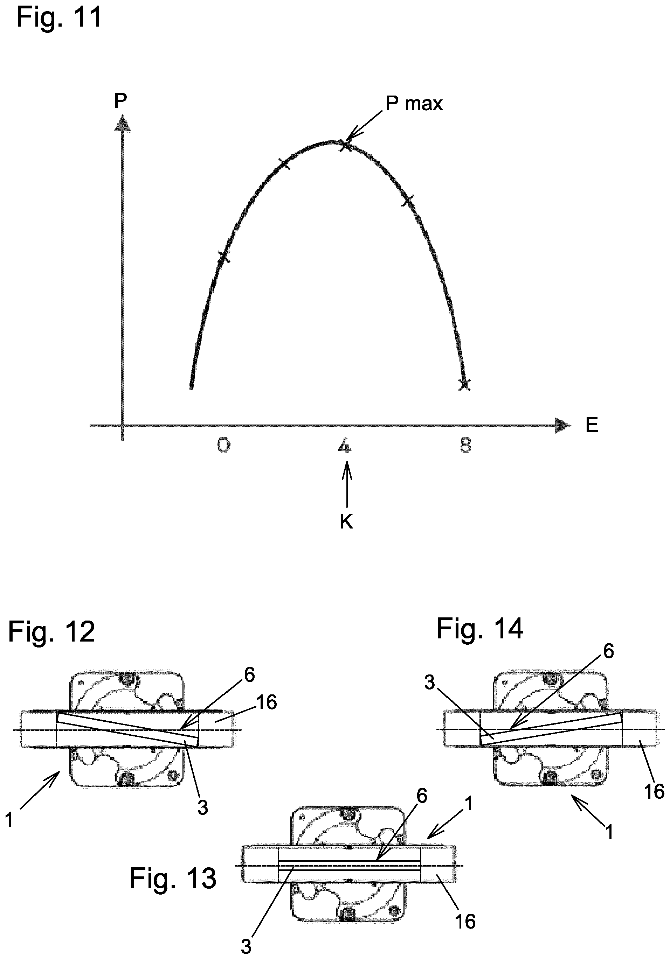

Eine erste Variante der Durchführung dieses Verfahrens wird anhand der Fig. 11 bis 14 veranschaulicht. In Fig. 11 ist wiederum der vom Drucksensor 8 gemessene Druckwert P für verschiedene Stellungen des Verschlussorgans 3 gegen den in der jeweiligen Stellung vom Encoder 7 ausgegebenen Encoderwert E aufgetragen. Die in Fig. 11 durchgezogene Linie zeigt die kontinuierliche Änderung des Druckes P mit der Veränderung der Stellung des Verschlussorgans 3 von kleineren Encoderwerten hin zum Maximum Pmax der Druckwerte P im Bereich des Encoderwerts 4 und das anschließende Abnehmen der Druckwerte P hin zu noch größeren Encoderwerten. Die in Fig. 11 eingetragenen Kreuze zeigen die Messwerte für den Fall, dass der Druck P nicht kontinuierlich, sondern eben nur bei gewissen Encoderwerten gemessen wird, wie dies der Fall ist, wenn z.B. von einem digitalen Encoder 7 nur ganzzahlige Encoderwerte ausgegeben werden. Fig. 12 veranschaulicht die Stellung des Verschlussorgans beim Encoderwert 0 aus Fig. 11. Fig. 13 zeigt die Stellung des Verschlussorgans 3 in der Minimaldurchflussstellung beim Encoderwert 4 aus Fig. 11 und Fig. 14 zeigt beispielhaft die Stellung des Verschlussorgans 3 beim Encoderwert 8 aus Fig. 11. Es ist gut zu erkennen, dass in Fig. 11 bei der hier beispielhaft veranschaulichten Durchführung des erfindungsgemäßen Verfahrens zur Bestimmung des Korrekturwertes K das Maximum Pmax der Druckwerte P beim Encoderwert 4 erkannt wird. Dieser Encoderwert 4 wird bei diesem Beispiel des erfindungsgemäßen Verfahrens dann als Korrekturwert K bestimmt.

Würde man nicht einen Encoder 7 verwenden, der nur ganzzahlige Encoderwerte E ausgibt, sondern einen solchen, bei dem die Encoderwerte E kontinuierlich ausgegeben werden, wie dies durch die durchgezogene Kurve in Fig. 11 dargestellt ist, so würde man eventuell erkennen, dass das tatsächliche Maximum Pmax nicht exakt beim Encoderwert 4, sondern etwas daneben liegt, so wie dies in Fig. 11 auch der Fall ist. Um dies oder auch ein gegebenenfalls vorhandenes Spiel im Verschlussorgan 3 erfassen und gegebenenfalls berücksichtigen zu können, kann das erfindungsgemäße Verfahren zur Bestimmung des Korrekturwertes K auch zweifach ausgeführt werden, so wie dies eingangs bereits erläutert wurde. Es kann also vorgesehen sein, dass das Verfahren ein erstes Mal und anschließend ein zweites Mal durchgeführt wird, wobei beim ersten Mal die Stellungen des Verschlussorgans 3 in einer ersten Richtung 11 durchlaufen werden und beim zweiten Mal die Stellungen des Verschlussorgans 3 in einer zweiten, der ersten Richtung 11 entgegengesetzten, Richtung 12 durchlaufen werden und beim ersten Mal ein erster Korrekturwert K1 und beim zweiten Mal ein zweiter Korrekturwert K2 bestimmt wird, und der Korrekturwert K auf Basis des ersten Korrekturwertes K1 und des zweiten Korrekturwertes K2 bestimmt wird.

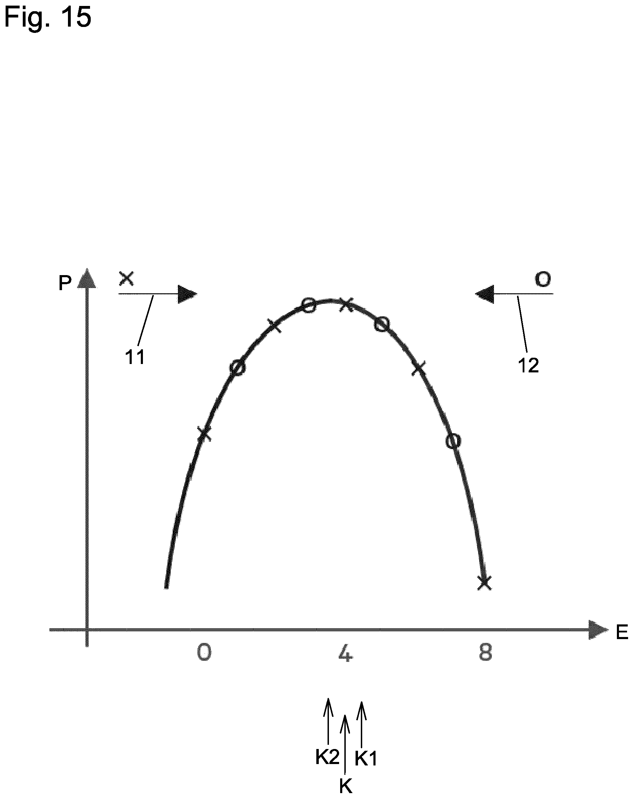

Ein Beispiel hierfür ist in Fig. 15 gezeigt. Hier wurde das Verfahren ein erstes Mal in Richtung 11, also von kleineren Encoderwerten hin zu größeren Encoderwerten E, und ein zweites Mal in der zweiten Richtung 12 von größeren Encoderwerten E in Richtung hin zu kleineren Encoderwerten E durchgeführt. Mit dem Symbol x sind in Fig. 15 die Druckwerte P dargestellt, die bei der Durchführung des Verfahrens in der ersten Richtung 11 bestimmt wurden. Die mit dem Kreis gekennzeichneten Druckwerte P wurden bei der Durchführung des Verfahrens in der zweiten Richtung 12 bestimmt. Bei der ersten Durchführung des Verfahrens ergibt sich der Korrekturwert K1. Bei der zweiten Durchführung des Verfahrens ergibt sich der Korrekturwert K2 aus der jeweiligen Lage des Maximums Pmax der gemessenen Druckwerte P. Vergleicht man dies mit der durchgezogenen, eine kontinuierliche Druckmessung darstellenden Kurve, so sieht man, dass die als Korrekturwerte K1 und K2 bestimmten Encoderwerte E beide etwas vom tatsächlichen Maximum Pmax der Druckwerte P abweichen. Es gibt nun verschiedene Möglichkeiten einen gemeinsamen Korrekturwert K auf Basis des ersten Korrekturwertes K1 und des zweiten Korrekturwertes K2 zu bestimmen. Z.B. wäre eine Mittelwertbildung möglich. Man könnte sich auch entscheiden, den kleineren oder den größeren der beiden Werte als Korrekturwert K weiterzuverwenden. Wenn die Regeleinrichtung 4 und der Encoder 7 nur mit ganzzahligen Encoderwerten E arbeiten, kann auch ein Auf- oder Abrunden des Korrekturwertes K auf eine ganze Zahl vorgesehen sein. Der sich gegebenenfalls ergebende Restfehler ist jedenfalls vertretbar. Auch bei dem in Fig. 15 dargestellten Beispiel würde der letztendlich bestimmte Korrekturwert dem Encoderwert 4 entsprechen.

Bei der Durchführung des erfindungsgemäßen Verfahrens zur Bestimmung des Korrekturwertes K ist vorzugsweise jedenfalls, wie eingangs bereits erläutert, vorgesehen, dass die Kammer 2 während der Durchführung des gesamten Verfahrens permanent vom Fluid durchströmt wird und die Änderung der Stellung des Verschlussorgans 3 die einzige sich während des Verfahrens ändernde, den Fluidstrom beeinflussende Größe ist. Weiters ist vorzugsweise auch vorgesehen, dass das Fluid während der Durchführung des Verfahrens mittels einer Pumpe 9 durch das Durchflussmengenstellventil 10 und die Kammer 2 und die Durchströmungsöffnung 6 hindurchgesaugt wird, wobei vorzugsweise vorgesehen ist, dass das Regelventil 1 zwischen der Pumpe 9 und der Kammer 2 angeordnet ist.

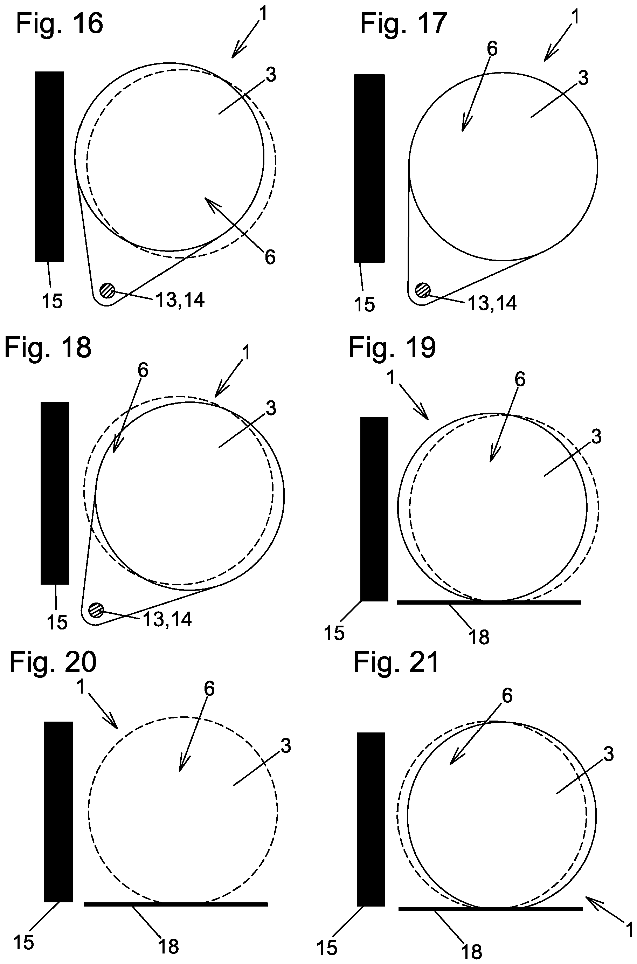

Bei den bisher erläuterten Ausführungsvarianten des erfindungsgemäßen Verfahrens zur Bestimmung des Korrekturwertes K wurde als Regelventil 1 jeweils das in den Fig. 2 und 3 gezeigte Butterfly-Ventil oder in anderen Worten Schmetterlingsventil verwendet. Das erfindungsgemäße Verfahren zur Bestimmung des Korrekturwertes K ist aber nicht auf diesen Ventiltyp beschränkt. Beispielhaft ausgewählte Alternativen von Regelventilen 1, welche bei erfindungsgemäßen Verfahren eingesetzt werden können, sind stark schematisiert und exemplarisch in den Fig. 16 bis 21 gezeigt. In den Fig. 16 bis 18 ist stark schematisiert ein sogenanntes Pendelventil dargestellt. Auch bei diesem ist das Verschlussorgan 3 ein Ventilteller. Dieser wird bei einem Pendelventil vom, in den Fig. 16 bis 18 nicht explizit dargestellten, Stellantrieb 5 um die parallel zu einer Normalen 14 auf den Ventilteller verlaufenden Schwenkachse 13 geschwenkt. Diese Schwenkachse 13 verläuft in der Regel randlich bzw. neben dem Ventilteller. In den Fig. 16 bis 18 ist zusätzlich auch noch ein Anschlag 15 dargestellt. Solche Pendelventile sind an sich bekannt, sodass sie nicht weiter erläutert und auch nicht detaillierter dargestellt werden müssen. Bei den verschiedenen Stellungen des Verschlussorgans 3 handelt es sich auch bei diesem Ventiltyp um verschiedene Winkelstellungen, welche dann jeweils einem entsprechenden Encoderwert E zugeordnet werden. Fig. 16 zeigt exemplarisch eine Stellung des Verschlussorgans 3 auf einer ersten Seite der Minimaldurchflussstellung. Fig. 17 zeigt die Minimaldurchflussstellung und Fig. 18 eine Stellung auf der anderen Seite der Minimaldurchflussstellung. Das erfindungsgemäße Verfahren zur Bestimmung des Korrekturwertes K kann mit solchen Regelventilen 1 in derselben, oben bereits erläuterten Art und Weise, wie bei einem Butterfly-Ventil gemäß Fig. 2 und 3 durchgeführt werden. Auch hier ist vorgesehen, dass von der Regeleinrichtung 4 die Stellung des Verschlussorgans 3 bei der das Maximum Pmax der Druckwerte P gemessen wird, als Minimaldurchflussstellung des Verschlussorgans 3 erkannt wird und der Encoderwert, bei dem die Minimaldurchflussstellung erkannt wird, als der Korrekturwert K bestimmt wird.

Bei dem Regelventil 1, welches in den Fig. 19 bis 21 schematisiert dargestellt ist, ist das Verschlussorgan 3 wiederum ein Ventilteller. Dieser ist bei diesem Ventiltyp aber nicht schwenkbar, sondern vom Stellantrieb 5 verschiebbar gelagert. Bei dem hier gezeigten Ausführungsbeispiel erfolgt das Verschieben des Verschlussorgans 3 mittels des hier ebenfalls nicht dargestellten Stellantriebs 5 entlang der Linearführung 18. Solche schiebetorartigen Regelventile 1 sind an sich bekannt und müssen ebenfalls nicht weiter erläutert werden. Auch mit ihnen kann das erfindungsgemäße Verfahren zur Bestimmung des Korrekturwertes K durchgeführt werden, wobei die verschiedenen Stellungen des Verschlussorgans 3 dann eben nicht verschiedene Winkelstellungen, sondern entlang einer, vorzugsweise linearen, Achse angeordnete Stellungen sind. Fig. 19 zeigt exemplarisch wiederum, wie bei der Durchführung des erfindungsgemäßen Verfahrens zur Bestimmung des Korrekturwertes K das Verschlussorgan 3 zunächst auf einer Seite der Minimaldurchflussstellung angeordnet werden kann. In Fig. 20 ist wiederum die Minimaldurchflussstellung gezeigt. Fig. 21 zeigt das Verschlussorgan 3 in einer Stellung, in dem es über die Minimaldurchflussstellung bereits hinweggefahren ist. Auch bei solchen Varianten von Regelventilen 1 können aber müssen nicht entsprechende Anschläge 15 vorhanden sein. Sind diese Anschläge 15 vorhanden, so kann ein erfindungsgemäßes Verfahren zur Bestimmung eines Korrekturwertes K vorsehen, dass das Verfahren mit einer Ausgangsstellung des Verschlussorgans 3 beginnt, in der sich das Verschlussorgan 3 am Anschlag 15 befindet. Dies muss aber, wie eingangs erläutert, nicht so sein. Auf den Anschlag 15 kann bei allen Ausführungsbeispielen auch verzichtet werden. Ohne Anschlag 15 können z.B. auch alle möglichen Stellungen des Verschlussorgans 3 bei der Durchführung des erfindungsgemäßen Verfahrens abgefahren werden. Es reicht aber in der Regel aus, einen gewissen Bereich an Stellungen abzufahren, in dem der Anwender des erfindungsgemäßen Verfahrens die Minimaldurchflussstellung vermutet.

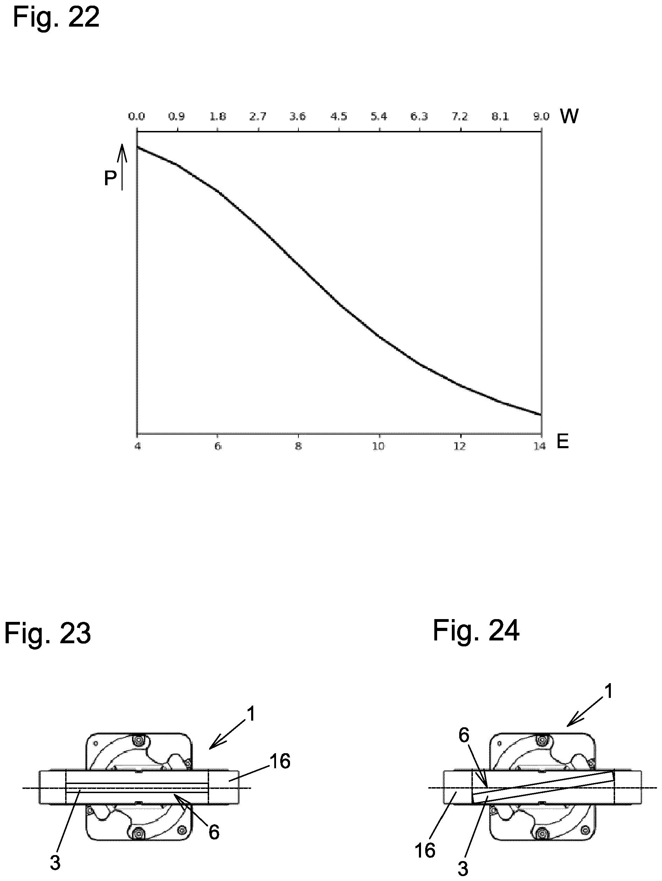

Nachdem der Korrekturwert K in der geschilderten Art und Weise erfindungsgemäß bestimmt ist, kann er nachfolgend für den Betrieb bzw. Normalbetrieb des Regelventils 1 verwendet werden. Es handelt sich dabei um ein erfindungsgemäßes Verfahren zum Regeln der Stellung des Verschlussorgans 3 des Regelventils 1 mittels der Regeleinrichtung 4, wobei die jeweils anzusteuernde Stellung des Verschlussorgans 3 unter Berücksichtigung des erfindungsgemäß bestimmten Korrekturwertes K von der Regeleinrichtung 4 bestimmt wird. Ein solches Verfahren wird anhand der Darstellung in Fig. 22 veranschaulicht. Hier ist wiederum der vom Drucksensor 8 gemessene Druckwert P gegen den Encoderwert E dargestellt. Gezeigt ist auch der wahre Winkel W, welchen das Verschlussorgan 3 im ersten Ausführungsbeispiel gegenüber der Minimaldurchflussstellung einnimmt. Um die Minimaldurchflussstellung einzustellen, steuert die Regeleinrichtung 4 bei diesem erfindungsgemäßen Verfahren das Verschlussorgan 3 nicht mit dem Encoderwert E gleich 0, sondern mit dem Encoderwert E gleich 4 an, wobei dieser Encoderwert E eben auf Basis des Korrekturwertes K bestimmt wird. Im in Fig. 22 gezeigten Beispiel ist der Korrekturwert K gleich 4. Fig. 23 zeigt die Minimaldurchflussstellung des Verschlussorgans 3 beim Encoderwert E gleich 4. Fig. 24 zeigt beispielhaft die Stellung des Verschlussorgans 3 beim Encoderwert E gleich 14. Bei dem anhand von Fig. 22 beispielhaft veranschaulichten Normalbetrieb des Regelventils 1 wird das Verschlussorgan 3 bevorzugt ausschließlich in solche Stellungen gebracht, bei denen der jeweilige Encoderwert E größer oder gleich den Korrekturwert K ist. Alternativ wäre es auch denkbar, dass der jeweilige Encoderwert E im kleiner oder gleich dem Korrekturwert K ist. Im Endeffekt besagt dies nur, dass nur Stellungen des Verschlussorgans 3 auf einer Seite der Minimaldurchflussstellung eingestellt werden und nicht, wie bei der Durchführung des Verfahrens zur Bestimmung des Korrekturwertes, Stellungen auf beiden Seiten der Minimaldurchführungsstellung angefahren werden.

**Legende zu den Hinweisziffern:**

| | | | |
|---|---|---|---|
| 1 | Regelventil | E | Encoderwert |
| 2 | Kammer | P | Druckwert |
| 3 | Verschlussorgan | Pmax | Maximum |
| 4 | Regeleinrichtung | K | Korrekturwert |
| 5 | Stellantrieb | K1 | erster Korrekturwert |
| 6 | Durchströmungsöffnung | K2 | zweiter Korrekturwert |
| 7 | Encoder | W | Winkel |
| 8 | Drucksensor | | |
| 9 | Pumpe | | |
| 10 | Durchflussmengenstellventil | | |
| 11 | erste Richtung | | |
| 12 | zweite Richtung | | |
| 13 | Schwenkachse | | |
| 14 | Normale | | |
| 15 | Anschlag | | |
| 16 | Ventilgehäuse | | |
| 17 | Fluidleitung | | |
| 18 | Linearführung | | |

## Patentansprüche

1. Verfahren zur Bestimmung eines Korrekturwertes (K) für eine Regeleinrichtung (4) für ein Regelventil (1), wobei das Regelventil (1) einen Fluidstrom durch eine Kammer (2) regelt, und ein Verschlussorgan (3) des Regelventils (1) von der Regeleinrichtung (4) mittels eines Stellantriebes (5) des Regelventils (1) in voneinander verschiedenen Stellungen relativ zu einer Durchströmungsöffnung (6) für den Fluidstrom angeordnet wird, wobei ein Encoder (7), insbesondere des Regelventils (1), vorgesehen ist und jede Stellung des Verschlussorgans (3) einem Encoderwert (E) des Encoders (7) entspricht, wobei in voneinander verschiedenen Stellungen des Verschlussorgans (3) mit einem Drucksensor (8) ein, insbesondere für das Fluid in der Kammer (2) repräsentativer, Druckwert (P) gemessen wird, wobei von der Regeleinrichtung (4) die Stellung des Verschlussorgans (3), bei der ein Maximum (Pmax) der Druckwerte (P) gemessen wird, als Minimaldurchflussstellung des Verschlussorgans (3) erkannt wird und aus dem Encoderwert (E), bei dem die Minimaldurchflussstellung erkannt wird, der Korrekturwert (K) bestimmt wird.

2. Verfahren nach Anspruch 1, wobei die Kammer (2) während der Durchführung des gesamten Verfahrens permanent vom Fluid durchströmt wird und die Änderung der Stellung des Verschlussorgans (3) die einzige sich während des Verfahrens ändernde, den Fluidstrom beeinflussende Größe ist.

3. Verfahren nach Anspruch 1 oder 2, wobei das Fluid während der Durchführung des Verfahrens mittels einer Pumpe (9) durch ein Durchflussmengenstellventil (10) und die Kammer (2) und die Durchströmungsöffnung (6) hindurchgesaugt wird, wobei vorzugsweise vorgesehen ist, dass das Regelventil (1) zwischen der Pumpe (9) und der Kammer (2) angeordnet ist.

4. Verfahren nach einem der Ansprüche 1 bis 3, wobei das Verfahren ein erstes Mal und ein zweites Mal durchgeführt wird, wobei beim ersten Mal die Stellungen des Verschlussorgans (3) in einer ersten Richtung (11) durchlaufen werden und beim zweiten Mal die Stellungen des Verschlussorgans (3) in einer zweiten, der ersten Richtung (11) entgegengesetzten, Richtung (12) durchlaufen werden und beim ersten Mal ein erster Korrekturwert (K1) und beim zweiten Mal ein zweiter Korrekturwert (K2) bestimmt wird, und der Korrekturwert (K) auf Basis des ersten Korrekturwertes (K1) und des zweiten Korrekturwertes (K2) bestimmt wird.

5. Verfahren nach einem der Ansprüche 1 bis 4, wobei das Verschlussorgan (3) ein Ventilteller ist, welcher vom Stellantrieb (5) um eine entlang des Ventiltellers verlaufende Schwenkachse (13) schwenkbar ist, wobei der Ventilteller auf einander gegenüberliegenden Seiten der Schwenkachse (13) über die Schwenkachse (13) übersteht.

6. Verfahren nach einem der Ansprüche 1 bis 4, wobei das Verschlussorgan (3) ein Ventilteller ist, welcher vom Stellantrieb (5) um eine parallel zu einer Normalen (14) auf den Ventilteller verlaufenden Schwenkachse (13) schwenkbar ist.

7. Verfahren nach einem der Ansprüche 1 bis 4, wobei das Verschlussorgan (3) vom Stellantrieb (5), vorzugsweise linear, verschiebbar gelagert ist.

8. Verfahren nach einem der Ansprüche 1 bis 7, wobei das Regelventil (1) eine, durch einen Anschlag (15) oder anderweitig vorgegebene Ausgangsposition aufweist und das Verschlussorgan (3) bei Durchführung des Verfahrens ausgehend von der Ausgangsposition des Verschlussorgans (3) in den voneinander verschiedenen Stellungen relativ zur Durchströmungsöffnung (6) für den Fluidstrom angeordnet wird.

9. Verfahren zum Regeln der Stellung eines Verschlussorgans (3) eines Regelventils (1) mittels einer Regeleinrichtung (4) wobei die jeweils anzusteuernde Stellung des Verschlussorgans (3) unter Berücksichtigung eines, mit einem Verfahren nach einem der Ansprüche 1 bis 8 bestimmten, Korrekturwerts (X) von der Regeleinrichtung (4) bestimmt wird.
